# EUROPÄISCHE PATENTSCHRIFT

(11) **EP 1 683 669 B1**
(45) Veröffentlichungstag und Bekanntmachung des Hinweises auf die Patenterteilung: **30.07.2008**
(21) Anmeldenummer: 06000680.6
(22) Anmeldetag: 13.01.2006
(51) Int. Cl.: B60J 7/08

(54) **Kraftfahrzeug mit einer offenen Ladefläche**
Vehicle having an open load carring body
Véhicule à structure de chargement ouverte

(30) Priorität: 21.01.2005 DE 102005002936
(43) Veröffentlichungstag der Anmeldung: 26.07.2006
(73) Patentinhaber: Wilhelm Karmann GmbH, 49084 Osnabrück (DE)
(72) Erfinder: Kreiling, Nils, 49078 Osnabrück (DE)

(56) Entgegenhaltungen:
- DE-A1- 10 139 354
- FR-A- 2 767 755
- US-A- 4 805 956
- US-A- 5 056 857

## Beschreibung

Die Erfindung betrifft ein Kraftfahrzeug nach dem Oberbegriff des Anspruchs 1.

Fahrzeuge der genannten Art werden häufig auch als Pick-up-Fahrzeuge bezeichnet und umfassen einen Insassenraum mit zumeist einer oder zwei Sitzreihen hintereinander, wobei sich an den Insassenraum und von diesem durch zumindest eine Begrenzungswand getrennt eine Ladefläche nach hinten hin anschließt.

Die DE 101 39 354 A1 zeigt ein derartiges Pick-Up-Fahrzeug mit einem öffnungsfähigen Dach, das in geöffneter Stellung vor der Abgrenzung zwischen dem Insassenraum und der Ladefläche in einer im wesentlichen vertikalen Ausrichtung der Dachteile halterbar ist. Dadurch wird für das geöffnete Dach zwischen Ladefläche und Insassenraum eine erhebliche Tiefe in Fahrzeuglängsrichtung benötigt.

Der Erfindung liegt das Problem zugrunde, die Öffnungsmöglichkeiten bei einem gattungsgemäßen Kraftfahrzeug zu erweitern.

Die Erfindung löst dieses Problem durch ein Kraftfahrzeug mit den Merkmalen des Anspruchs 1. Hinsichtlich vorteilhafter Ausgestaltungen und Weiterbildungen der Erfindung wird auf die weiteren Ansprüche 2 bis 13 verwiesen.

Durch die erfindungsgemäße Öffnungs- und Ablagemöglichkeit der Begrenzungswand ist eine Verlängerung der Ladefläche in Richtung Insassenraum zumindest um den in geschlossener Stellung von der Begrenzungswand eingenommenen Raum ermöglicht, so daß auch sehr lange Gegenstände, zum Beispiel Weihnachtsbäume, transportiert werden können. Auch wenn die Ladefläche hier als offen bezeichnet wird, versteht sich, daß diese auch von einer oberseitigen Abdekkung zumindest zeitweise verschlossen sein kann.

Bei einem Fahrzeug mit zwei oder mehr Sitzreihen gilt dies insbesondere, wenn der Insassenraum eine Rückbank mit nach vorne verlagerbaren Sitzlehnen und/oder Sitzflächen umfaßt, so daß auch ein Teil des Insassenraums zusätzlich als Verlängerung der Ladefläche herangezogen werden kann. Auch bei einem Fahrzeug mit nur einer Sitzreihe kann der Beifahrersitz oder seine Lehne zur Verlängerung der Ladefläche umlegbar sein.

Dabei muß die Begrenzungswand nicht zwangsläufig vollständig verlagerbar sein, sondern es kann schon erhebliche Vorteile bringen, diese zum Beispiel nur mit ihrem oberen Bereich abwärts verlagerbar zu gestalten.

Wenn die Begrenzungswand zu ihrer Abwärtsverlagerung in einer kombinierten Bewegung an seitlichen Gestängeteilen geführt ist, ergibt sich eine flüssige und auch automatisiert durchführbare Öffnungsbewegung.

Insbesondere ist vorteilhaft der Begrenzungswand zumindest ein weiterer Dachteil vorgeordnet und dieser zusammen mit der Begrenzungswand oder dem Teil der Begrenzungswand in die Öffnungsstellung verlagerbar. Damit ist dann ein sehr gutes Freiluftgefühl nach Art eines Cabriolet-Fahrzeugs geschaffen, ohne daß die abgelegten Dachteile die Länge der Ladefläche einschränken würden.

Wenn das Fahrzeug zumindest zwei vorgeordnete Dachteile umfaßt, die zu ihrer Öffnung zunächst übereinander verlagerbar und nachfolgend gegenüber der hinteren Begrenzungswand einschwenkbar sind, kann auch ein langer Insassenraum mit beispielsweise zwei Sitzreihen hintereinander erfindungsgemäß ausgebildet sein und eine Dachöffnung über seine ganze Länge erlauben.

Dabei kann besonders günstig zumindest einer der vorgeordneten Dachteile während der Fahrt nach Art eines Schiebedachs öffnungsfähig sein.

Eine zuverlässige Bewegungsmöglichkeit der zu öffnenden Teile und eine geschützte Ablage ist erreicht, wenn die Ladefläche einen zumindest teilweise nach hinten öffnenden Bodenbereich umfaßt, der in abgelegter Stellung der Begrenzungswand und ggf. des oder der vorgeordneten Dachteil(e) diese nach Art eines Verdeckkastendeckels übergreift.

Sofern die hintere Begrenzungswand und der oder die vorgeordnete(n) Dachteil(e) in ihrer geschlossenen Stellung an seitlichen Rahmenteilen angelehnt sind, ergibt sich eine besonders raumsparende Ablagestellung dieser Teile, beispielsweise zumindest teilweise zwischen den Radkästen, weil die abgelegten Teile dadurch deutlich schmaler als die Fahrzeugbreite ausgebildet sein können.

Insbesondere durch eine karosseriefeste und nicht demontierbare Ausbildung der Rahmenteile sind Sicherheit und Karosseriesteifigkeit erhöht, so daß das erfindungsgemäße Fahrzeug beispielsweise auch ein Geländewagen sein kann. Auch ist dann eine feste, bis zum Dach reichende B-Säule möglich, die die Überschlagsicherheit weiter verbessert und auch als Halterung für hintere Türen dienen kann.

Eine die Öffnungs- und Schließbewegung unterstützende Führung der Begrenzungswand und/oder Dachteile an den seitlichen Rahmenteilen ist zudem ermöglicht.

Weitere Vorteile und Merkmale der Erfindung ergeben sich aus einem in der Zeichnung schematisch dargestellten und nachfolgend auch mit Abwandlungen beschriebenen Ausführungsbeispiel des Gegenstandes der Erfindung.

### In der Zeichnung zeigt:

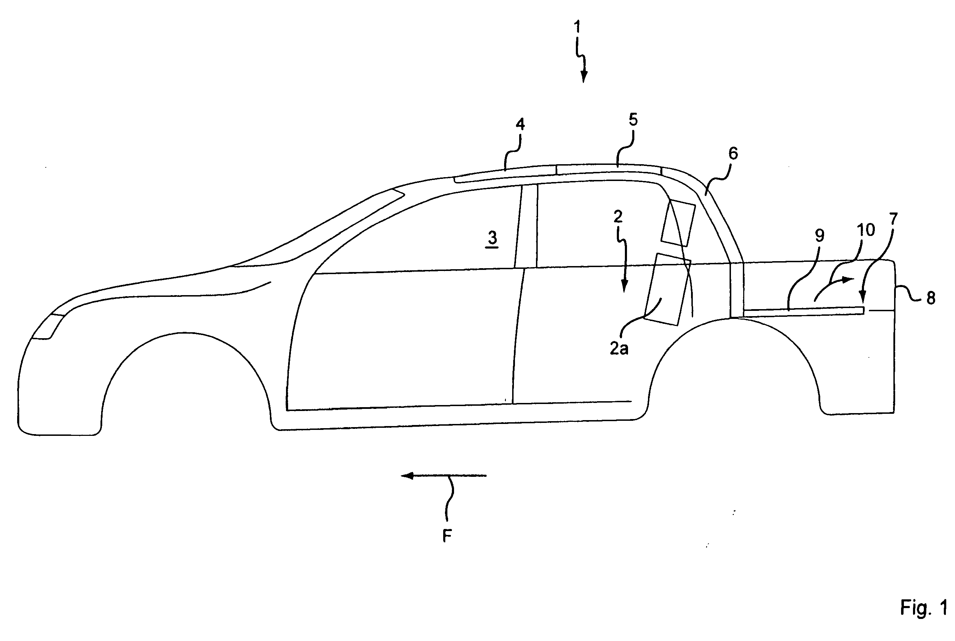

- Fig. 1: eine schematische Seitenansicht eines erfindungsgemäßen Fahrzeugs in viertüriger Ausbildung mit festen seitlichen Dachrahmen und B-Säule bei geschlossenem Dach,
- Fig. 2: das Fahrzeug nach Fig. 1 in an der vertikalen Längsmittelebene abgebrochener Ansicht von oben,
- Fig. 3: eine ähnliche Ansicht wie Fig. 1 nach Öffnung des vordersten der vorgeordneten Dachteile,
- Fig. 4: eine ähnliche Ansicht wie Fig. 3 während der Öffnung der Begrenzungswand und der daran angehängten vorgeordneten Dachteile,
- Fig. 5: eine ähnliche Ansicht wie Fig. 4 in geöffneter Stellung der Begrenzungswand und der Dachteile mit zusätzlich umgelegten Rücksitzlehnen.

Das erfindungsgemäße Kraftfahrzeug 1 ist im Ausführungsbeispiel als viertüriges Fahrzeug mit einer hinteren Sitzreihe 2 ausgebildet. Dies ist nicht zwingend. Um den hier vergleichsweise langen Insassenraum 3 zu überdecken, sind zwei im geschlossenen Zustand im wesentlichen horizontal liegende und bezüglich der Fahrtrichtung F bündig hintereinander folgende Dachteile 4, 5 vorgesehen, die einer hinteren Begrenzungswand 6 des Insassenraumes 3 in dieser Stellung in Fahrtrichtung F vorgeordnet sind. Die hier zwei Dachteile 4, 5 sind hier als jeweils in sich starre und beispielsweise überwiegend transparente Plattenteile ausgebildet. Auch jeweils bezogene und einen starren Rahmen ausbildende Teile wären möglich. Die Dachteile 4, 5 können somit wie hier an ihren Außenflächen voneinander getrennte Einheiten ausbilden. Auch ein einzelner Dachteil nach Art einer Jalousie oder als Lamellendach wäre möglich. Die hintere Begrenzungswand 6 kann ein Rückfenster R umfassen, das zur Fahrzeugquermitte hin nach außen ausgewölbt sein kann. Wie ein üblicher hinterer Dachteil kann auch die Begrenzungswand 6 schräg zur Vertikalen stehen.

Heckwärts der Begrenzungswand 6 schließt sich eine offene Ladefläche 7 an, die auch von einer oberseitigen Abdeckung - nicht gezeichnet - überdeckbar sein kann und an deren heckwärtigem Ende eine häufig nach unten schwenkbare Ladeklappe 8 vorgesehen ist.

Im Boden der Ladefläche 7 ist ein nach hinten in Richtung des Pfeils 10 öffnungsfähiger Bodenbereich 9 nach Art einer Klappe gebildet, der einen Aufnahmeraum oberseitig begrenzt, in den die hier zwei Dachteile 4, 5 und die Begrenzungswand 6 in ihrer geöffneten Stellung einlegbar sind.

Die Dachteile 4, 5 stützen sich in ihrer geschlossenen Stellung an seitlichen Rahmenteilen 11 ab, die entweder nach Öffnung der Dachteile 4, 5 und der Begrenzungswand 6 demontierbar oder auch karosseriefest sein können, was insbesondere den Vorteil mit sich bringt, daß die Überschlagsicherheit und Steifigkeit der Karosserie annähernd der eines Fahrzeugs mit komplett festem Dach entsprechen, so daß das Fahrzeug 1 auch beispielsweise einen Geländewagen oder eine Großraumlimousine ausbilden kann.

Die seitlichen Rahmenteile 11 umfassen im hinteren Bereich C-Säulen, an denen sich die Begrenzungswand 6 bündig anlehnen kann. Im gezeichneten Ausführungsbeispiel weist die hier viertürige Karosserie zudem noch eine feste B-Säule 12 - gegebenenfalls mit quer verbindendem Überrollschutz - auf, die bis zum seitlichen Rahmenteil 11 erstreckt ist.

Sowohl die Dachteile 4, 5 als auch die hintere Begrenzungswand 6 können daher je nach Ausbildung eine gegenüber der Fahrzeugbreite deutlich verminderte Breite aufweisen, was ihre Ablage erleichtert.

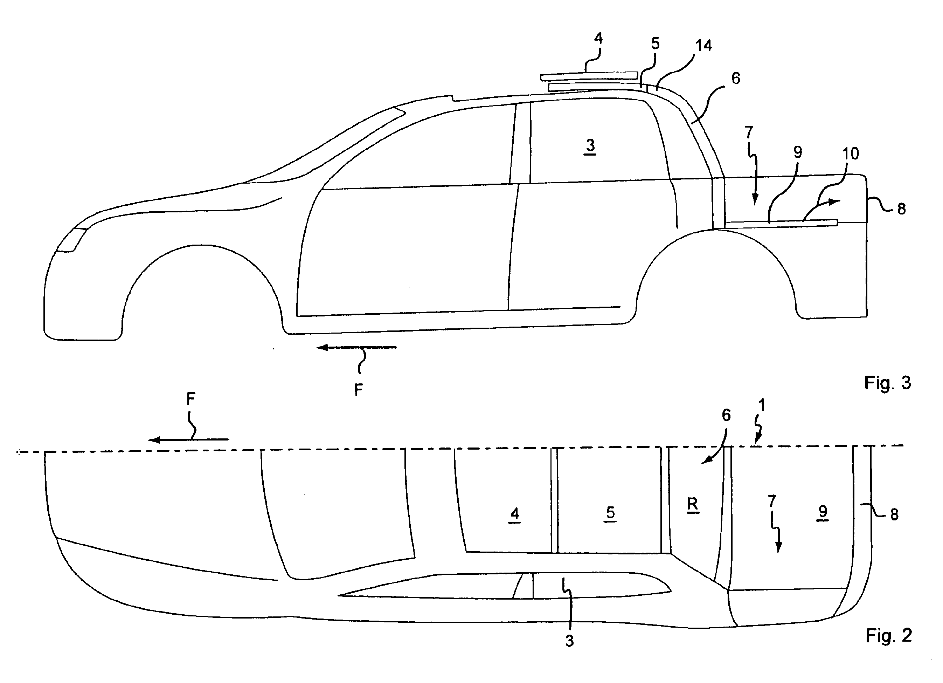

Wie in Fig. 3 sichtbar ist, kann der vorderste 4 der vorgeordneten Dachteile 4, 5 auch während der Fahrt nach Art eines Schiebedachs über den dahinter liegenden Dachteil 5 verlagerbar sein, wobei auch die so teilgeöffnete Stellung eine stabile Fahrstellung bildet.

Eine vollständige Öffnung sowohl der Dachteile 4, 5 als auch der den Insassenraum 3 rückwärtig begrenzenden Wandung 6 ist zudem derart möglich, daß eine Öffnung vom Windschutzscheibenrahmen bis zum Boden der Ladefläche 7 erreichbar ist, sofern die Begrenzungswand 6 vollständig öffnungsfähig ist. Auch eine geteilte Rückwand mit einer Teilöffnung, etwa nur ihres oberen Bereichs mit dem Rückfenster R, ist möglich. in jedem Fall ist eine nahezu Vollcabriolet-Stellung und damit ein sehr gutes Freiluftgefühl erreichbar, ohne daß die Ladefläche 7 dabei eingeschränkt wird. Die Begrenzungswand 6 und die Dachteile 4, 5 können dabei manuell oder voll- oder teilautomatisch zu bewegen sein.

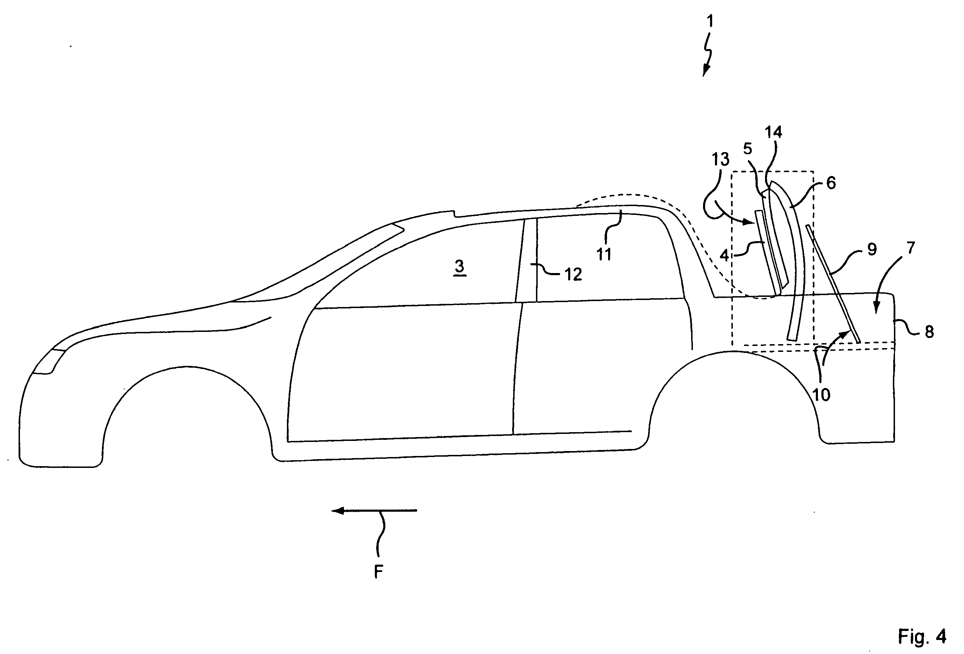

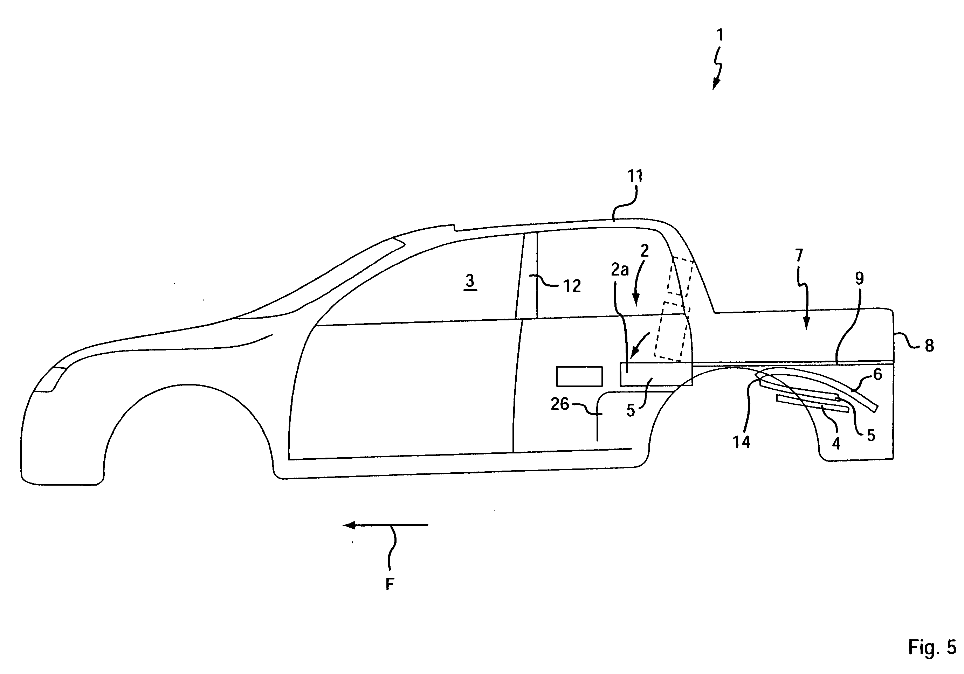

Zur vollständigen Öffnung (Fig. 4, Fig. 5) der hinteren Begrenzungswand 6 und der hier zwei vorgeordneten Dachteile 4, 5 ist in einem ersten Schritt die Öffnung des vordersten Dachteils 4 nach Art eines Schiebedachs parallel zu dem dahinter liegenden Dachteil 5 vorzunehmen, wobei der Dachteil 4 über oder unter den Dachteil 5 oder in eine von diesem gebildete Tasche einfahrbar ist.

Bei der Verlagerung kann der vordere Dachteil 4 an den seitlichen Rahmenteilen 11 geführt sein, was die Bewegung des Dachteils 4 auch bei hohen Geschwindigkeiten mit großer Zuverlässigkeit ermöglicht.

Das so gebildete Paket aus parallel zueinander liegenden Dachteilen 4, 5 (Fig. 3) kann, sofern gewünscht, weiter geöffnet werden (Fig. 4, Fig. 5):

Die das Rückfenster R umfassende Begrenzungswand 6 führt bei ihrer beginnenden Öffnung (Übergang von Fig. 3 zu Fig. 4) zunächst eine erste, nach hinten öffnende Schwenkbewegung und nachfolgend eine zweite, zur ersten mehr oder weniger gegensinnige Schwenkbewegung aus. Dadurch legt sich die Begrenzungswand 6 so ab, daß die Heckscheibe R mit ihrer bei geschlossenen Dach nach außen zeigenden Seite nach oben weist. Hierfür kann die Begrenzungswand über seitliche Gestängeteile - nicht gezeichnet - an der Karosserie beweglich gehalten sein. Insbesondere können diese zumindest ein Siebengelenk oder eine Gelenkkette mit weiteren Gelenken bilden, so daß der Gesamtbewegungsablauf der Begrenzungswand 6 über eine Kopplung von Schwenkbewegungen bewirkt werden kann. Auch ein (zumindest teilweises) Abgleiten in seitlichen Kulissen ist alternativ oder zusätzlich möglich.

Bei der ersten, heckwärtigen Schwenkbewegung der Begrenzungswand 6 schwenkt das daran angelenkte Paket aus Dachteilen 4, 5 zunächst in Richtung des Pfeils 13 um eine mitbewegte und quer zum Fahrzeug gelegene Achse 14 ein, wobei das vordere Ende des Pakets an den seitlichen Rahmenteilen 11 und an den C-Säulen geführt sein kann, was die Halterung der Dachteile 4, 5 stabilisiert und ihre Bewegung auch während der Fahrt ermöglichen kann. Die Windangriffsfläche ist gering. Dabei legen sich die Dachteile 4, 5 platzsparend in die Wölbung des Rückfensters R der einen hinteren Dachteil bildenden Begrenzungswand 6. Diese flach angelegte Endstellung der Relativbewegung der Dachteile 4, 5 gegenüber der Begrenzungswand 6 (Fig. 4) kann durch Schlösser oder ähnliche Festlegungen zwischen den Teilen gesichert sein.

Um die Begrenzungswand 6 mit den Dachteilen 4, 5 unter den Boden der Ladefläche 7 absenken zu können, ist der Bodenbereich 9 geöffnet und wird über den abgelegten Teilen wieder geschlossen (Fig. 5).

In geöffneter Endstellung ist die Begrenzungswand 6 nahezu horizontal und oberhalb der an dieser hängenden Dachteile 4, 5 gehalten.

Dadurch, daß die hintere Begrenzungswand 6 im oberen Bereich das Rückfenster R und im unteren Bereich einen die Ladefläche 7 nach vorne begrenzenden Wandungsabschnitt umfaßt, wird bei vollständiger Öffnung der Begrenzungswand 6 ohne weiteres eine Verlängerung der Ladefläche 7 in Fahrtrichtung F nach vorne bewirkt.

Zusätzlich kann, wie in Fig. 5 gezeichnet, der Insassenraum 3 eine Rückbank 2 mit nach vorne verlagerbaren Sitzlehnen 2a und/oder Sitzflächen 2b umfassen. Hier genügt es, die Sitzlehnen 2a umzulegen, um eine bündige und ebene Fortsetzung des aufgrund des Bodenstaufachs relativ hoch liegenden Bodens der Ladefläche 7 nach vorne zu erreichen.

## Patentansprüche

1. Kraftfahrzeug (1) mit einer hinter einem Insassenraum (3) gelegenen offenen Ladefläche (7), der in Fahrtrichtung (F) eine an den Insassenraum (3) anschließende Begrenzungswand (6) vorgeordnet ist,
**dadurch gekennzeichnet,**
**daß** die Begrenzungswand (6) zumindest teilweise in eine Öffnungsstellung heckwärts und abwärts verlagerbar und unter dem Boden der Ladefläche (7) halterbar ist.

2. Kraftfahrzeug (1) nach Anspruch 1,
**dadurch gekennzeichnet,**
**daß** die Begrenzungswand (6) zu ihrer Abwärtsverlagerung in einer kombinierten Bewegung an seitlichen Gestängeteilen geführt ist.

3. Kraftfahrzeug (1) nach einem der Ansprüche 1 oder 2,
**dadurch gekennzeichnet,**
**daß** der Begrenzungswand (6) zumindest ein weiterer Dachteil (4;5) vorgeordnet und zusammen mit der Begrenzungswand (6) oder dem Teil der Begrenzungswand (6) in die Öffnungsstellung verlagerbar ist.

4. Kraftfahrzeug (1) nach Anspruch 3,
**dadurch gekennzeichnet,**
**daß** das Fahrzeug (1) zumindest zwei vorgeordnete Dachteile (4;5) umfaßt, die zu ihrer Öffnung zunächst übereinander verlagerbar und nachfolgend gegenüber der hinteren Begrenzungswand (6) einschwenkbar sind.

5. Kraftfahrzeug (1) nach einem der Ansprüche 3 oder 4,
**dadurch gekennzeichnet,**
**daß** die der hinteren Begrenzungswand (6) vorgeordneten Dachteile (4;5) während der Fahrt übereinander verlagerbar sind.

6. Kraftfahrzeug (1) nach einem der Ansprüche 4 oder 5,
**dadurch gekennzeichnet,**
**daß** in Öffnungsstellung die abgelegte Begrenzungswand (6) oberhalb des oder der vorgeordneten Dachteile (4;5) gehalten ist.

7. Kraftfahrzeug (1) nach einem der Ansprüche 1 bis 6,
**dadurch gekennzeichnet,**
**daß** die Ladefläche (7) einen zumindest teilweise nach hinten öffnenden Bodenbereich (9) umfaßt, der bei abgelegter Stellung der Begrenzungswand (6) und ggf. des oder der vorgeordneten Dachteil(e) (4;5) diese nach Art eines Verdeckkastendeckels übergreift.

8. Kraftfahrzeug (1) nach einem der Ansprüche 3 bis 7,
**dadurch gekennzeichnet,**
**daß** die übereinander verlagerte Lage der vorgeordneten Dachteile (4;5) eine stabile Fahrstellung des Fahrzeugs (1) bildet.

9. Kraftfahrzeug (1) nach einem der Ansprüche 1 bis 8,
**dadurch gekennzeichnet,**
**daß** die hintere Begrenzungswand (6) und der oder die vorgeordnete(n) Dachteil(e) (4;5) in ihrer geschlossenen Stellung an seitlichen Rahmenteilen (11) angelehnt sind.

10. Kraftfahrzeug (1) nach Anspruch 9,
**dadurch gekennzeichnet,**
**daß** die seitlichen Rahmenteile (11) karosseriefest sind.

11. Kraftfahrzeug (1) nach einem der Ansprüche 9 oder 10,
**dadurch gekennzeichnet,**
**daß** zumindest während eines Teils der Öffnungsbewegung Dachteile (4;5) an den seitlichen Rahmenteilen (11) geführt sind.

12. Kraftfahrzeug (1) nach einem der Ansprüche 1 bis 11,
**dadurch gekennzeichnet,**
**daß** die hintere Begrenzungswand (6) im oberen Bereich ein Rückfenster (R)und im unteren Bereich einen die Ladefläche (7) nach vorne begrenzenden Wandungsabschnitt umfaßt und durch seine Öffnung eine Verlängerung der Ladefläche (7) nach vorne bewirkt.

13. Kraftfahrzeug (1) nach Anspruch 12,
**dadurch gekennzeichnet,**
**daß** der Insassenraum (3) eine Rückbank (2) mit nach vorne verlagerbaren Sitzlehnen (2a) und/oder Sitzflächen (2b) umfaßt.

## Claims

1. A motor vehicle (1) with an open loading space (7) which is situated behind a passenger space (3) and which has in front of it in the direction of travel (F) a delimiting wall (6) which is attached to the passenger space (3),
**characterised in that**
the delimiting wall (6) is able to be displaced rearwards and downwards at least partially into an open position and is able to be mounted below the floor of the loading space (7).

2. The motor vehicle (1) according to Claim 1,
**characterised in that**
the delimiting wall (6) is guided at lateral rod parts for the purposes of its downward displacement in a combined movement.

3. The motor vehicle (1) according to one of claims 1 or 2,
**characterised in that**
at least one further roof part (4; 5) is arranged in front of the delimiting wall (6) and is able to be displaced into the open position together with the delimiting wall (6) or the part of the delimiting wall (6).

4. The motor vehicle (1) according to Claim 3,
**characterised in that**
the vehicle (1) includes at least two forwardly situated roof parts (4; 5), which, in order to be opened, can firstly be displaced over one another and then can be pivoted with respect to the rear delimiting wall (6).

5. The motor vehicle (1) according to one of claims 3 or 4,
**characterised in that**
the roof parts (4; 5) arranged in front of the rear delimiting wall (6) can be displaced over one another during travel.

6. The motor vehicle (1) according to one of claims 4 or 5,
**characterised in that**
in the open position, the stored delimiting wall (6) is held above the forwardly arranged roof part(s) (4; 5).

7. The motor vehicle (1) according to one of claims 1 to 6,
**characterised in that**
the loading space (7) includes a floor area (9) which opens at least partially to the rear and which, when the delimiting wall (6) and, where applicable, the forwardly arranged roof part(s) (4; 5) are in the stored position, overlaps these in the manner of a folding top case cover.

8. The motor vehicle (1) according to one of claims 3 to 7,
**characterised in that**
the position of the forwardly arranged roof parts (4; 5) displaced over one another constitutes a stable travel position for the vehicle (1).

9. The motor vehicle (1) according to one of claims 1 to 8,
**characterised in that**
the rear delimiting wall (6) and the forwardly arranged roof part(s) (4; 5) bear on lateral frame parts (11) when in their closed position.

10. The motor vehicle (1) according to Claim 9,
**characterised in that**
the lateral frame parts (11) are attached to the car body.

11. The motor vehicle (1) according to one of claims 9 or 10,
**characterised in that**
roof parts (4; 5) are guided at the lateral frame parts (11) during
at least part of the opening movement.

12. The motor vehicle (1) according to one of claims 1 to 11,
**characterised in that**
the rear delimiting wall (6) includes, in the upper area, a rear window (R) and, in the lower area, a wall section which forwardly delimits the loading space (7), and as a result of its opening brings about an extension of the loading space (7) to the front.

13. The motor vehicle (1) according to Claim 12,
**characterised in that**
the passenger space (3) includes a rear seat (2) with backrests (2a) and/or seat surfaces (2b) which can be displaced forwardly.

## Revendications

1. Véhicule automobile (1) avec une surface de chargement (7) ouverte placée derrière un habitacle (3), avec une paroi de délimitation (6) se raccordant à l'habitacle (3) placée en amont de ladite surface dans le sens de la conduite (F),
**caractérisé en ce que**,
en position d'ouverture, la paroi de délimitation (6) peut être déplacée au moins partiellement en arrière et vers le bas de façon à obtenir une position d'ouverture et peut être fixée sous le sol de la surface de chargement (7).

2. Véhicule automobile (1) selon la revendication 1,
**caractérisé en ce que**
la paroi de délimitation (6) lors de son déplacement vers le bas est guidée dans un mouvement combiné sur des parties latérales de tringlerie.

3. Véhicule automobile (1) selon l'une des revendications 1 ou 2,
**caractérisé en ce que**
au moins une autre partie de toit (4 ; 5) est placée en amont de la paroi de délimitation (6) et est déplaçable conjointement avec la paroi de délimitation (6) ou la partie de la paroi de délimitation (6) dans la position d'ouverture.

4. Véhicule automobile (1) selon la revendication 3,
**caractérisé en ce que**
le véhicule automobile (1) comprend au moins deux parties de toit (4 ; 5) placées en amont qui, lors de leur ouverture, sont tout d'abord déplaçables l'une sur l'autre puis, par la suite, peuvent être rentrées par pivotement par rapport à la paroi de délimitation arrière (6).

5. Véhicule automobile (1) selon l'une des revendications 3 ou 4,
**caractérisé en ce que**,
pendant la conduite, les parties de toit (4 ; 5) placées en amont de la paroi de délimitation arrière (6) peuvent être déplacées l'une sur l'autre.

6. Véhicule automobile (1) selon l'une des revendications 4 ou 5,
**caractérisé en ce que**,
en position d'ouverture, la paroi de délimitation (6) déposée est maintenue en dessus de la ou des partie(s) de toit (4 ; 5) placée(s) en amont.

7. Véhicule automobile (1) selon l'une des revendications 1 à 6,
**caractérisé en ce que**,
la surface de chargement (7) comprend une zone de sol (9) s'ouvrant au moins partiellement vers l'arrière, laquelle, en position déposée de la paroi de délimitation (6) et, le cas échéant, de la ou des partie(s) de toit (4 ; 5) placée(s) en amont, recouvre ces dernières comme un couvercle de logement de capote.

8. Véhicule automobile (1) selon l'une des revendications 3 à 7,
**caractérisé en ce que**
la position de déplacement les unes sur les autres des parties de toit (4 ; 5) placées en amont forme une position de conduite stable du véhicule automobile (1).

9. Véhicule automobile (1) selon l'une des revendications 1 à 8,
**caractérisé en ce que**
la paroi de délimitation arrière (6) et la ou les partie(s) de toit (4 ; 5) placée(s) en amont en position de fermeture sont appuyées sur des parties latérales du châssis (11).

10. Véhicule automobile (1) selon la revendication 9,
**caractérisé en ce que**
les parties latérales du châssis (11) sont fixées à la carrosserie.

11. Véhicule automobile (1) selon l'une des revendications 9 ou 10,
**caractérisé en ce que**,
au moins pendant une partie du mouvement d'ouverture, des parties de toit (4 ; 5) sont guidées sur des parties latérales du châssis (11).

12. Véhicule automobile (1) selon l'une des revendications 1 à 11,
**caractérisé en ce que**,
dans la zone supérieure, la paroi de délimitation arrière (6) comprend une vitre arrière (R) et, dans la zone inférieure, un tronçon de paroi délimitant vers l'avant la surface de chargement (7) et, de par son ouverture, générant un allongement de la surface de chargement (7) vers l'avant.

13. Véhicule automobile (1) selon la revendication 12,
**caractérisé en ce que**
l'habitacle (3) comprend une banquette arrière (2) avec des dossiers de siège (2a) et/ou des surfaces de siège (2b) pouvant être déplacés vers l'avant.
